# EUROPÄISCHE PATENTSCHRIFT

(11) **EP 3 600 756 B1**
(45) Veröffentlichungstag und Bekanntmachung des Hinweises auf die Patenterteilung: **01.09.2021**
(21) Anmeldenummer: 18703274.3
(22) Anmeldetag: 30.01.2018
(51) Int. Cl.: B23K 31/02, B23K 33/00, B23K 101/00, B23K 101/18, B23K 101/34

(54) **VERFAHREN ZUR HERSTELLUNG EINES WERKSTÜCKVERBUNDES UND WERKSTÜCKVERBUND**
METHOD OF PRODUCING A WORKPIECE COMPOSITE, AND WORKPIECE COMPOSITE
PROCÉDÉ DE FABRICATION D'UNE PIÈCE COMPOSITE ET PIÈCE COMPOSITE

(30) Priorität: 23.03.2017 DE 102017204919
(43) Veröffentlichungstag der Anmeldung: 05.02.2020
(73) Patentinhaber: Bayerische Motoren Werke Aktiengesellschaft, 80809 München (DE)
(72) Erfinder: BEVC, Boris, 80469 München (DE); GLÜCK, Bernhard, 82256 Fürstenfeldbruck (DE); KIRSCHNER, Robert, 82140 Olching (DE); LINDACHER, Robert, 86567 Hilgertshausen-Tandern (DE); OPEL, Dietmar, 85368 Moosburg a.d.Isar (DE)
(86) Internationale Anmeldenummer: PCT/EP2018/052227
(87) Internationale Veröffentlichungsnummer: WO 2018/171961

(56) Entgegenhaltungen:
- CN-A- 103 567 613
- DE-A1- 19 753 103
- DE-A1-102004 035 887
- DE-A1-102009 003 655
- JP-A- H06 218 542

## Beschreibung

Der Erfindung betrifft einen Werkstückverbund, insbesondere für eine Fahrzeugkarosserie, sowie ein Verfahren zur Herstellung eines Werkstückverbundes.

Im Rahmen des Leichtbaus werden in der Fahrzeugindustrie verstärkt Blechbauteile hinsichtlich des Gewichts optimiert. Es ist bekannt, Gewichtseinsparungen zu erreichen, indem Verbundbauteile verwendet werden mit einem Blechwerkstück, welches entsprechend den lokalen Beanspruchungen verstärkt ist.

Solche Verstärkungen werden z.B. durch Verstärkungsbleche erzielt, die lokal in Bereichen mit besonderer Beanspruchung auf einem Basisblech vorgesehen sind. Bei sogenannten Tailored Blanks werden Bleche unterschiedlicher Dicke oder Festigkeit gezielt aneinander gesetzt und miteinander verbunden, wodurch ein Werkstückverbund mit lokal variierenden Eigenschaften erzeugt wird. So ist beispielsweise aus der Druckschrift DE 10 2013 211 076 A1 ein Karosseriebauteil in Form einer Stütze Heckverkleidung bekannt, das aus einem Mittelteil und zumindest zwei Seitenteilen zusammengesetzt ist, die mittels Schweißverbindung gefügt sind. Das Mittelteil, welches als Schlossgegenstück für das Schloss einer Hecklappe ausgestaltet ist. wird vorzugsweise aus einem Blech mit größerer Materialstärke ausgebildet als die Seitenteile.

Hierbei sind den bekannten Verfahren und Werkstückverbunden Grenzen gesetzt. So führt das thermische Fügen von Blechen mit großen Dickenunterschieden zu Problemen und ist z.B. ab gewissen Dickenunterschieden oder bei ungünstigen Materialpaarungen nicht darstellbar. Um dennoch Werkstückverbunde mit gezielten lokalen Verstärkungen herzustellen, sind aufwendige Konstruktionsmaßnahmen oder Fügeverfahren notwendig.

Die Druckschrift JP H06 218542 A offenbart ein Verfahren zur Herstellung eines Tailored Blanks, das aus mehreren Blechen unterschiedlicher Dicke hergestellt wird, die im Stumpfstoß aneinander geschweißt werden. Zur Vermeidung von Spannungen bei der späteren Umformung im Presswerkzeug wird ein Abschnitt vorgesehen, in dem das dickere Blech geneigt bis auf die Dicke des dünneren Blechs ausläuft.

Das Dokument DE 10 2009 003 655 A1 offenbart ein Verfahren zur Herstellung einer Blechplatine, bei welchem zwei Bleche an ihren Verbindungskanten miteinander verbunden werden, wobei die zwei Bleche unterschiedliche Dicken aufweisen. Vor dem Verbinden der zwei Bleche wird zumindest der Bereich der Verbindungskante von dem dickeren Blech auf eine vorgebbare Dicke in einem Umformwerkzeug gepresst, derart, dass die Verbindungskante der Bleche im Wesentlichen die gleiche Dicke aufweisen. Aus der Druckschrift DE 10 2004 035 887 A1 ist es im Zusammenhang mit Tailored Blanks weiterhin bekannt, die Dicke eines dickeren Blechs bereits vor dem Zusammenführen der Einzelbleche mittels eines Walzverfahrens auf die Dicke des dünneren Blechs zu reduzieren.

Weiterhin ist aus der Druckschrift CN 103 567 613 A ein Schweißprozess bekannt zur Herstellung eines Kesselwagens aus einem Stahl-Verbundblech. Zwei Stahl-Verbundbleche, jeweils bestehend aus einer Edelstahlschicht, die auf einer niedriglegierten Stahlschicht angeordnet ist, werden im Stumpfstoss mit einer y-förmigen Naht miteinander verschweißt. Zur Erzeugung der Naht erfolgt zunächst ein Unterpulverschweißen gefolgt von einem SchutzgasSchweißen.

Aus der Druckschrift DE 197 53 103 A1 (Basis für den Oberbegriff der Ansprüche 1 und 6) ist ein Werkstückverbund mit zwei Blechen bekannt, die in einer Überlappanordnung angeordnet und mittels einer Kehlnaht zwischen einer Stirnfläche des Oberblechs und einer Flanke des Unterblechs miteinander verschweißt sind. Vor dem Ausbilden der Schweißnaht wird die Stirnfläche des Oberblechs durch eine Biegevorgang, gefolgt von einem Schneidevorgang und einem erneuten Biegevorgang derart angeschrägt, dass ein erwünschter Winkel kleiner 90 Grad zwischen der Schnittfläche des Oberblechs und seiner dem Unterblech zugewandten Seite erreicht wird.

Vor diesem Hintergrund ist es Aufgabe der Erfindung eine für die Großserienfertigung geeignete Möglichkeit zu schaffen, wie die Gestaltungsspielräume bei der Konzeption von Werkstückverbunden vergrößert werden können.

Gelöst wird diese Aufgabe durch ein Verfahren nach Patentanspruch 1 und eine Werkstückanordnung nach Patentanspruch 6. Weitere vorteilhafte Ausgestaltungen ergeben sich aus den Unteransprüchen und der nachfolgenden Beschreibung.

Es wird ein Verfahren zum Herstellen eines Werkstückverbundes mit wenigstens zwei Werkstücken angegeben, bei dem ein erstes und zweites Werkstück zueinander positioniert werden und durch ein thermisches Fügeverfahren in einem Fügeabschnitt stoffschlüssig aneinander gefügt werden. Bei dem thermischen Fügeverfahren kann es sich um ein Schweißverfahren und/oder ein Lötverfahren handeln. Beim Schweißen wird das Material der zu verbindenden Fügepartner bis über die Liquidustemperatur erhitzt. Die schmelzflüssigen Phasen beider Werkstücke vermischen sich und erstarren nach Abkühlung zu einer stoffschlüssigen Verbindung. Dem Schmelzbad kann ein Zusatzwerkstoff zugegeben werden. Dagegen wird beim Löten eine schmelzflüssige Phase durch Aufschmelzen eines Lotwerkstoffs erzeugt. Die Werkstücke selbst werden nicht über die Liquidustemperatur erhitzt oder nur oberflächlich angeschmolzen. Nach dem Erstarren ist wie beim Schweißen eine stoffschlüssige Verbindung der Werkstücke hergestellt. Für Werkstückverbunde mit stark unterschiedlichen Liquidustemperaturen kann auch eine Kombination aus Schweißen und Löten erfolgen, z.B. kann bei einem Stahl-/Aluminiumverbund stahlseitig eine Lötverbindung und aluminiumseitig eine Schweißverbindung ausgebildet werden, was auch als Schweißlöten bezeichnet wird.

Die stoffschlüssige Verbindung wird zwischen einer Stirnfläche des ersten Werkstücks und dem zweiten Werkstück ausgebildet. Hierzu sind die Werkstücke gemäß der Erfindung in einer Überlappanordnung zueinander positioniert, wobei das erste Werkstück überlappend zu dem zweiten Werkstück angeordnet ist und die Fügeverbindung als Kehlnaht zwischen der Stirnfläche des ersten Werkstücks und einer Flanke des zweiten Werkstücks erzeugt ist.

Erfindungsgemäß wird vor dem Ausbilden der stoffschlüssigen Verbindung das erste Werkstück zumindest in dem Fügeabschnitt mit einer an die Stirnfläche angrenzenden Einprägung versehen, wodurch die Dicke des ersten Werkstücks im Bereich der Stirnfläche reduziert wird. Als Fügeabschnitt wird derjenige Abschnitt des Werkstücks bezeichnet, in dem die Fügeverbindung ausgebildet wird.

Vorzugsweise wird die Dicke des ersten Werkstücks lokal derart reduziert, dass sich fügbare Geometrien oder hinsichtlich des Fügens optimierte Zonen und/oder Wärmebedingungen zwischen dem ersten und zweiten Werkstück ergeben. Die lokale Dickenreduzierung im Fügeabschnitt ermöglicht es, Werkstücke mit sehr großen Dickenunterschieden, z.B. mehr als 0,6 mm, dennoch prozesssicher zu fügen. Insbesondere ist es möglich, die Dicke des ersten Werkstücks im Fügeabschnitt derart zu reduzieren, dass das erste und zweite Werkstück an der Fügestelle annähernd gleich große Dicken aufweisen. Zudem verbessert das Verfahren auch das Fügen von schwer fügbaren Materialpaarungen, wie z.B. Aluminium und Stahl durch entsprechende Dickenanpassung. Beispielsweise kann ein Stahlwerkstück an der Fügestelle dünn und ein Aluminiumwerkstück an der Fügestelle dick ausgebildet werden. Werden Werkstücke mit stark unterschiedlichen elektrochemischen Potentialen, wie z.B. verschiedene Stahllegierungen miteinander oder Stahl mit Aluminium gefügt, so kann durch die Dickenreduzierung Einfluss auf die Zusammensetzung des Mischschweißguts genommen werden. Der Werkstoffübergang an der Fügestelle kann gezielt gesteuert werden zur Verringerung der Korrosionsneigung.

Beim. Einbringen der Einprägung wird das Material des Werkstücks in diesem Bereich gestaucht und verdrängt. Neben der gewünschten Dickenreduzierung kommt es vorteilhafter Weise zu einer Verfestigung, welche mit einem Abfall der Kantenrissempfindlichkeit einhergeht.

Die Einprägung wird zumindest im Fügeabschnitt ausgebildet. Weist das Werkstück mehr als einen Fügeabschnitt auf, so können alle Fügeabschnitte mit einer Einprägung versehen werden, die voneinander verschieden oder gleich sein können. Es kann ebenso vorteilhaft sein, eine durchgehende Einprägung auszubilden, die mehrere Fügeabschnitte miteinander verbindet. Die Einprägung grenzt an die Stirnfläche des ersten Werkstücks an und kann z.B. entlang der gesamten Werkstückkante oder auch umlaufend um das Werkstück ausgebildet sein.

Die Form der Einprägung ist grundsätzlich nicht festgelegt und kann entsprechend den Anforderungen an die Fügestelle variiert werden. Vorteilhafter Weise wird jedoch die Dicke des Werkstücks im Verlaufe der Einprägung (betrachtet vom innenliegenden Beginn der Einprägung in Richtung auf die Stirnfläche des Werkstücks) abnehmen. Es kann vorteilhaft sein, wenn das Werkstück in einer Ausgestaltung durch die Einprägung mit einer Fase versehen wird. Hierdurch wird die Werkstückdicke in Richtung auf die Stirnfläche linear reduziert und eine gegenüber der Werkstückoberfläche abgeschrägte Fläche erzeugt.. Die abgeschrägt Fläche kann unmittelbar an die Stirnfläche angrenzen, fertigungsbedingt kann jedoch zwischen abgeschrägter Fläche und Stirnfläche ein kleiner Absatz oder ein Plateau ausgebildet sein, das z.B. eine Breite von weniger als 1 mm aufweisen kann. Der Winkel der Fase kann variiert werden und vorteilhafter Weise z.B. in einem Bereich von 20 bis 70 Grad oder in einem Bereich von 30 bis 60 Grad liegen.

Die Einprägung kann mit geringem Mehraufwand prozesssicher hergestellt werden, z.B. durch Prägen, Rollprägen, Walzen oder Rändeln. Vorteilhafter Weise erfordert das Verfahren keine zusätzlichen Prozessschritte. So kann in einer Ausgestaltung die Erzeugung der Einprägung in einen Prozessschritt zur Herstellung des Werkstücks integriert sein. Die Einprägung wird in dieser Ausgestaltung also in einem Prozessschritt erzeugt. der im Herstellungsprozess des Werkstücks bereits vorgesehen ist. So ist es z.B. denkbar, die Einprägung bereits im Walzwerk bei der Erzeugung von Blechplatinen oder Blechhalbzeugen auszubilden. Handelt es sich bei den Werkstücken um Blechformteile, so kann die Einprägung auch bei der Formgebung der Bauteile z.B. in einem pressegebundenen Prozess ausgebildet werden. Beispielsweise können in den Presswerkzeugen entsprechende Prägenasen, z.B. am Stempel oder Niederhalter, vorgesehen werden.

Besonders vorteilhaft ist es, wenn die Einprägung in einer Ausgestaltung des Verfahrens in demselben Prozessschritt erzeugt wird, in welchem durch Beschneiden oder Durchtrennen des ersten Werkstücks die Stirnfläche erzeugt wird. Insbesondere für metallische Blechbauteile kann so die Schnittgratbildung und die Flitterbildung reduziert bzw. verhindert werden. Bei dieser Verfahrensführung wird beispielsweise in einem Presswerkzeug zunächst die Einprägung durch einen Niederhalter und entsprechenden Prägestempel erzeugt. Beim weiteren Schließen des Presswerkzeugs durchtrennt dann z.B. eine Schneidmatrize das Werkstück in der Einprägung oder angrenzend an die Einprägung, wodurch die Stirnfläche erzeugt wird. Beim Durchtrennen bzw. Schneiden verbleibt zumindest ein Teil der Einprägung am ersten Werkstück.

Das erfindungsgemäße Verfahren ist auf alle schweißbaren Werkstücke anwendbar. Das Verfahren eignet sich insbesondere zur Herstellung von metallischen Werkstückverbunden. Bei den Werkstücken kann es sich z.B. um einzelne Blechplatinen handeln, die mit dem Verfahren zu einem Blechplatinenverbund in Form eines Tailor Blank gefügt werden. Es können ein oder mehrere Verstärkungsbleche auf eine Blechplatine aufgebracht werden. Das Verfahren ist jedoch nicht auf Halbzeuge beschränkt, sondern kann auch verwendet werden, um Bauteile, insbesondere Blechformteile miteinander zu einem Bauteilverbund zu verbinden oder einzelne Bauteile mit einem oder mehreren Verstärkungsblechen zu verstärken. Die verwendeten Werkstücke können zudem ein- oder mehrschichtig aufgebaut sein oder als Sandwichwerkstücke vorliegen, die Schichten aus Metall und Kunststoff umfassen. In einer Ausgestaltung werden mit dem Verfahren Bleche oder Blechformteile gefügt, deren Dicken um mehr als 0,6 mm voneinander abweichen.

Besondere Vorteile erzielt das Verfahren, wenn das mit der Prägung zu versehene Werkstück bereits im Vorfeld mit einer Oberflächenbeschichtung und gemäß der Erfindung versehen ist. Unter Oberflächenbeschichtung im Sinne der Erfindung wird eine funktionale Beschichtung verstanden, die aus ästhetischen Gründen, zur Funktionalisierung des Werkstücks, aus Schutz- oder Stabilitätsgründen und insbesondere aus Gründen der chemischen oder mechanischen Stabilität auf die Oberfläche des Werkstücks aufgebracht ist. Die Oberflächenbeschichtung kann ein oder mehrschichtig aufgebaut sein, stoffschlüssig mit dem Werkstück verbunden sein oder lose auf diesem aufliegen. Die Oberflächenbeschichtung kann nur partiell oder über die gesamte Werkstückoberfläche aufgebracht sein. Das Werkstück kann nur auf der Seite, auf der die Einprägung ausgebildet wird, eine Oberflächenbeschichtung aufweisen oder ebenfalls auf der gegenüberliegenden Seite.

Durch den Prägevorgang wird die Oberflächenbeschichtung gemeinsam mit dem Grundwerkstoff des Werkstücks eingedrückt, so dass die Oberflächenbeschichtung im Bereich der Einprägung zumindest teilweise erhalten bleibt. Im Bereich der Einprägung kann die Oberflächenbeschichtung eine geringere Dicke aufweisen als am restlichen Werkstück oder nur noch teilweise vorhanden sein, z.B. kann im Bereich der Einkerbung nur noch 40 % oder 70% der Werkstückoberfläche mit der Oberflächenbeschichtung bedeckt sein. Die durch die Oberflächenbeschichtung eingetragene Funktionalität bleibt auch nach dem Durchtrennen des Werkstücks im Bereich der Einprägung erhalten. Handelt es sich bei der Oberflächenbeschichtung beispielsweise um eine Antikorrosionsschicht, so ermöglicht das Verfahren einen verbesserten Korrosionsschutz. Je nach verwendeter Oberflächenbeschichtung können auch zusätzliche Funktionalitäten in das Werkstück eingebracht werden, wie z.B. Adhäsionsschichten oder Schichten eines für den Fügeprozess benötigten Zusatzwerkstoffs, wie z.B. eines Lotwerkstoffs. Die Oberflächenbeschichtung kann in einer Ausgestaltung beispielsweise eine Adhäsionsbeschichtung, eine Antikorrosionsbeschichtung oder eine Lotbeschichtung sein. Eine Nachbearbeitung des Werkstücks zur zusätzlichen Funktionalisierung oder Versiegelung kann verzichtet werden, wodurch Materialkosten und Arbeitsaufwand eingespart werden können.

Die Einprägung kann nur an dem ersten Werkstück ausgebildet werden. Es ist jedoch auch denkbar, dass zweite Werkstück ebenfalls mit einer Einprägung zu versehen, um die Werkstücke an der Fügestelle gezielt geometrisch vorteilhaft zu gestalten, z.B. eine Geometrie zur Erzeugung einer V-Naht. In einer Ausgestaltung der Erfindung kann es daher vorgesehen sein, das zweite Werkstück im Fügeabschnitt ebenfalls mit einer Einprägung zu versehen, welche die Dicke des zweiten Werkstücks reduziert. Die Einprägung im zweiten Werkstück kann wie voranstehend zum ersten Werkstück beschrieben ausgebildet werden, insbesondere kann auch das zweite Werkstück eine Oberflächenbeschichtung aufweisen.

Weiterhin wird ein Werkstückverbund von wenigstens zwei Werkstücken angegeben, bei dem ein erstes Werkstück und ein zweites Werkstück in einem Fügeabschnitt durch eine mit einem thermischen Fügeverfahren hergestellte stoffschlüssige Verbindung verbunden sind. Die stoffschlüssige Verbindung ist zwischen einer Stirnfläche des ersten Werkstücks und dem zweiten Werkstück ausgebildet. Erfindungsgemäß ist das erste Werkstück zumindest in dem Fügeabschnitt mit einer an die Stirnfläche angrenzenden Einprägung versehen, derart, dass die Dicke des ersten Werkstücks durch die Einprägung im Bereich der Stirnfläche reduziert ist.

In einer bevorzugten Ausgestaltung ist die Einprägung als entlang der Werkstückstirnfläche verlaufende Fase ausgebildet. Das erste Werkstück kann in einer Ausgestaltung eine Oberflächenbeschichtung aufweisen und diese Oberflächenbeschichtung ist im Bereich der Einprägung zumindest teilweise erhalten. Der Werkstückverbund kann insbesondere mit dem voranstehend beschriebenen Verfahren hergestellt werden und erzielt als solcher dieselben technischen Wirkungen und Vorteile wie sie für das Verfahren beschrieben sind.

Durch die Erfindung werden insbesondere neue Gestaltungsspielräume bei der Konzeption und Auslegung von Tailor welded Platinen oder Blechformbauteilen eröffnet. Es wird möglich, Werkstücke mit großen Dickenunterschieden prozesssicher zu fügen, beispielsweise mit Dickenunterschieden von mehr als 0,6 mm. Zudem werden insbesondere Überlappschweißverbindungen bei großen Blechdickendifferenzen möglich. Weiterhin können bisher nicht genutzte Nahtformen, wie z.B. V-Nähte zum Fügen von Werkstücken unterschiedlicher Dicke eingesetzt werden. Es können Werkstücke aus verschiedenen Materialien, z.B. unterschiedliche Stahllegierungen oder Stahl mit Aluminium, in verbesserter Art und Weise gefügt werden. Die Entgasungsproblematik bei beschichteten Blechen wird reduziert. Zudem lässt sich die Wärmeeinflusszone an der Fügestelle durch die Art und Ausgestaltung der Einprägung steuern.

Die oben beschriebenen Eigenschaften, Merkmale und Vorteile dieser Erfindung sowie die Art und Weise, wie diese erreicht werden, werden klarer und deutlicher verständlich anhand der Zeichnung und im Zusammenhang mit der folgenden Beschreibung der Ausführungsbeispiele. Sofern in dieser Anmeldung der Begriff "kann" verwendet wird, handelt es sich sowohl um die technische Möglichkeit als auch um die tatsächliche technische Umsetzung.

Im Folgenden werden Ausführungsbeispiele an Hand der beiliegenden Zeichnungen erläutert. Darin zeigen:
- Figur 1:: eine Prinzipskizze eines mit dem Verfahren hergestellten Werkstückverbundes, und
- Figuren 2 bis 6: beispielhafte Ausgestaltungen zur Herstellung eines Werkstückverbundes mit dem Verfahren.

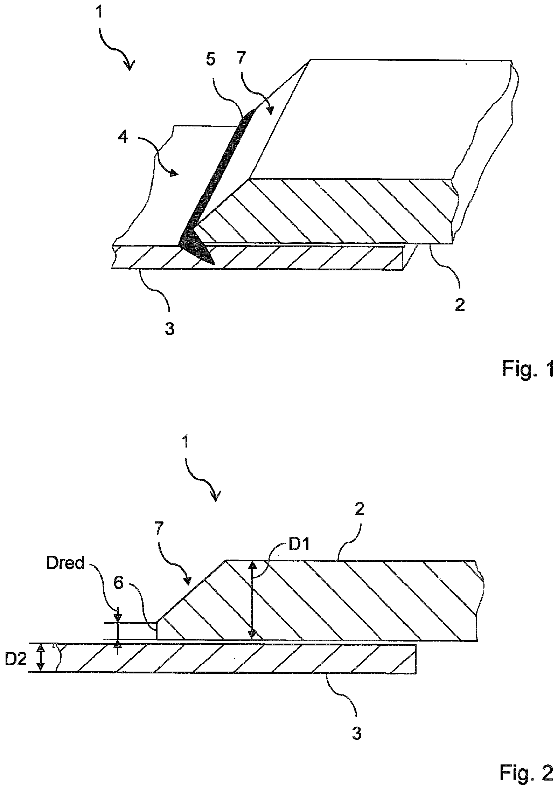

Figur 1 ist eine Prinzipskizze eines beispielhaften Werkstückverbundes 1, welcher mit dem Verfahren hergestellt wurde.

Der Werkstückverbund 1 umfasst ein erstes Werkstück 2, das überlappend zu einem zweiten Werkstück 3 angeordnet und in einem Fügeabschnitt 4 mittels einer stoffschlüssigen Fügeverbindung 5 mit dem zweiten Werkstück 3 verbunden ist. Die Fügeverbindung 5 ist beispielhaft als Stirnkehlnaht zwischen einer Stirnfläche 6 des ersten Werkstücks 2 und dem zweiten Werkstück 3 ausgebildet. Die Stirnkehlnaht 5 kann auch als Flankenkehlnaht bezeichnet werden.

Figur 2 zeigt den Werkstückverbund 1 aus Figur 1 vor dem Ausbilden der Schweißnaht 5. Das erste und zweite Werkstück 2 und 3 weisen stark unterschiedliche Dicken D1 und D2 auf, die beispielsweise um mehr als 0,6 mm voneinander abweichen. Um die Schweißbarkeit der beiden Werkstücke zu verbessern, ist vor dem Ausbilden der Stirnkehlnaht 5 eine Einprägung 7 in dem ersten Werkstück 2 erzeugt worden. Die Einprägung 7 grenzt an die Stirnfläche 6 an und ist derart ausgebildet, dass die Dicke D_{red} des ersten Werkstücks 2 an der Stirnfläche 6 gegenüber der ursprünglichen Werkstückdicke D1 reduziert ist. Insbesondere wird durch die Einprägung 7 eine Fügegeometrie im Fügeabschnitt 4 erzeugt, mit der das Fügen der Werkstücke trotz starker Dickenuriterschiede mit konventionellen thermischen Fügeverfahren, wie z.B. Schweißen möglich ist. Analog ist es selbstverständlich ebenso möglich, die Werkstücke z.B. mittels Schweißlöten oder Löten zu verbinden. Entsprechend kann die Fügeverbindung 5 auch als Lötverbindung oder als Schweiß-/Lötverbindung ausgebildet sein.

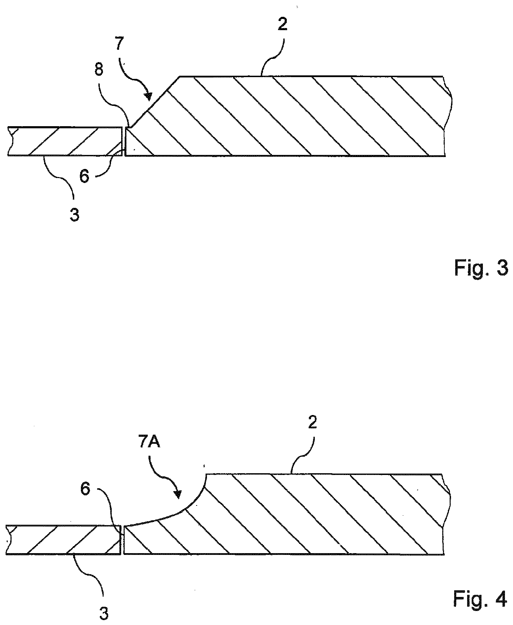

Während in Figur 1 die Werkstücke in einer Überlappanordnung angeordnet sind, sind andere Anordnungen, wie z.B. die in Figur 3 gezeigte Anordnung im Stumpfstoß ebenso möglich, aber nicht im Rahmen dieser Erfindung. Hierbei kann die Einprägung 7 so ausgebildet sein, dass die zu verbindenden Werkstücke an ihren Stirnflächen im Wesentlichen die gleiche Dicke aufweisen.

Durch die in den Figuren 1 bis 3 dargestellte Einprägung 7 ist das erste Werkstück zur Stirnfläche 7 hin mit einer Fase versehen. Im Bereich der Fase verringert sich die Dicke des ersten Werkstücks linear, betrachtet von der Ursprungsdicke D1 in Richtung auf die Stirnfläche 6. Fertigungsbedingt kann am Übergang von der Stirnfläche 7 zur Fase ein kleines Plateau 8 vorhanden sein, wie in Figur 3 dargestellt. Gleichwohl kann die Einprägung 7 auch andere Formen aufweisen, z.B. eine gerundete Form, wie anhand der Einprägung 7A in Figur 4 beispielhaft dargestellt.

Die Einprägung 7, 7A wird in dem ersten Werkstück ausgebildet, bevor die stoffschlüssige Verbindung erzeugt wird. Die Einprägung kann bereits bei der Herstellung des ersten Werkstücks 2 erzeugt werden, z.B. im Walzwerk oder in einem Umformschritt zur Formgebung des ersten Werkstücks 2. Besonders bevorzugt ist es, wenn die Einprägung 7 in dem gleichen Prozessschritt erzeugt wird, in welchem durch ein Beschneiden oder Durchtrennen des ersten Werkstücks 2 auch die Stirnfläche 6 erzeugt wird.

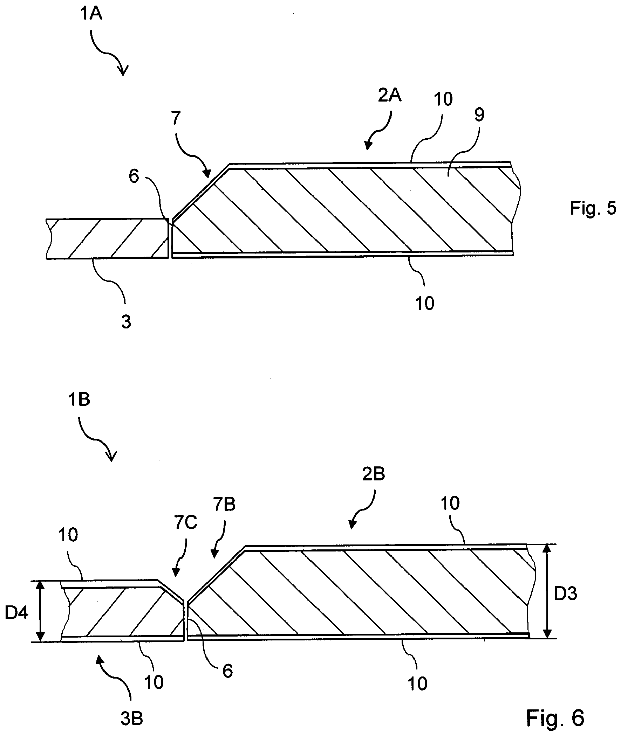

Besonders vorteilhaft ist das Verfahren, wenn das erste Werkstück 2 eine Oberflächenbeschichtung gemäß der Erfindung aufweist. Die Oberflächenbeschichtung ist gemäß der Erfindung eine Antikorrosionsbeschichtung. Sie kann z.B. stoffschlüssig auf das erste Werkstück aufgebracht sein oder lose auf diesem aufliegen. Figur 5 zeigt beispielhaft einen noch nicht gefügten Werkstückverbund 1A bei dem das erste Werkstück 2A einen Grundkörper 9 beinhaltet, der auf beiden Oberflächen vollständig mit einer Oberflächenbeschichtung 10 versehen ist. Durch das Ausbilden der Einprägung 7 sinkt ein Teil des Grundkörpers 9 sowie die darauf befindliche Oberflächenbeschichtung 10 ein. Durch die resultierende Nachverdichtung wird die Oberflächenbeschichtung 10 im Bereich der Einprägung 7 ggf. in einer dünneren Schichtdicke vorliegen, als im restlichen Werkstückbereich. Die Oberflächenbeschichtung 10 bleibt vorzugsweise bis an die Stirnfläche 6 heran erhalten. So ist es möglich, die Oberflächenbeschichtung gezielt in den Bereich der Einprägung 7 einzubringen. Eine nachträgliche Versiegelung oder Nacharbeitung der Einprägung 7 ist nicht notwendig. Es können Werkstückverbunde mit hoher Funktionalität und geringfügigem zusätzlichem Fertigungsaufwand hergestellt werden.

Ebenso kann auch das zweite Werkstück 3, wie für das erste Werkstück beschrieben, mit einer Einprägung versehen werden. Figur 6 zeigt einen weiteren beispielhaften Werkstückverbund 1B vor Ausbilden der stoffschlüssigen Fügeverbindung, bei dem sowohl das erste Werkstück 2B als auch das zweite Werkstück 3B mit einer Oberflächenbeschichtung 10 versehen sind. Durch Einprägungen 7B und 7C sind beide Werkstücke mit einer Fase versehen, so dass die Dicke der Werkstücke D3 und D4 zur Stirnfläche 6 hin abnimmt und eine V-Naht Verbindung trotz der stark unterschiedlichen Werkstückdicken möglich wird.

Das erste und zweite Werkstück sind im Einzelnen nicht beschränkt und können beispielsweise ein Halbzeug, wie z.B. eine Blechplatine, oder ein Bauteil, wie z.B. ein Blechbauteil oder ein Sandwichbauteil sein. Die Werkstücke weisen vorzugsweise Dicken im Bereich von bis zu 4 mm auf. Die Erfindung ist sowohl geeignet, um einzelne Blechplatinen zu einem Tailor Blank, wie z.B. einem Tailor Welded Blank, zu verbinden oder auf einer Blechplatine oder einem Blechformbauteil ein oder mehrere Verstärkungsbleche aufzubringen. Ebenso ist die Erfindung auch anwendbar um Blechformbauteile miteinander zu einem Bauteilverbund zu fügen. Insbesondere können Werkstücke mit stark voneinander abweichenden Dicken prozesssicher miteinander gefügt werden.

Gleiche Bezugszeichen beziffern gleiche Elemente. Die Ausführungsbeispiele sind nicht maßstabsgetreu und nicht beschränkend. Abwandlungen im Rahmen des fachmännischen Handelns sind möglich.

### Bezugszeichenliste

- 1, 1A, 1B: Werkstückverbund
- 2, 2A, 2B, 3, 3B: Werkstücke
- 4: Fügeabschnitt
- 5: stoffschlüssige Verbindung
- 6: Stirnfläche
- 7, 7A, 7B: Einprägung
- 8: Plateau
- 9: Grundkörper
- 10: Oberflächenbeschichtung
- D1, D2, D_{red}: Dicke

## Patentansprüche

1. Verfahren zur Herstellung eines Werkstückverbundes mit wenigstens zwei Werkstücken, bei dem ein erstes Werkstück (2) und ein zweites Werkstück (3) in einer Überlappanordnung zueinander positioniert werden und durch ein thermisches Fügeverfahren in einem Fügeabschnitt (4) eine Kehlnaht (5) zwischen einer Stirnfläche (6) des ersten Werkstücks (2) und einer Flanke des zweiten Werkstücks (3) ausgebildet wird,
**dadurch gekennzeichnet, dass**
vor dem Ausbilden der Kehlnaht (5) das erste Werkstück (2) zumindest in dem Fügeabschnitt (4) mit einer an die Stirnfläche (6) angrenzenden Einprägung (7) versehen wird, wodurch die Dicke (D1) des ersten Werkstücks (2) im Bereich der Stirnfläche (6) reduziert wird und
das erste Werkstück (2) bereits vor dem Erzeugen der Einprägung (7) mit einer Oberflächenbeschichtung (10) in Form einer Antikorrosionsschicht versehen ist und die Oberflächenbeschichtung (10) im Bereich der Einprägung (7) zumindest teilweise erhalten bleibt.

2. Verfahren nach Patentanspruch 1,
**dadurch gekennzeichnet, dass**
das erste Werkstück (2) durch die Einprägung (7) mit einer Fase versehen wird.

3. Verfahren nach einem der vorangehenden Patentansprüche, **dadurch gekennzeichnet, dass**
die Einprägung (7) in demselben Prozessschritt erzeugt wird, in dem durch Durchtrennen oder Beschneiden des ersten Werkstücks (2) die Stirnfläche (6) erzeugt wird.

4. Verfahren nach einem der vorangehenden Patentansprüche,
**dadurch gekennzeichnet, dass**
das erste Werkstück (2) oder das zweite Werkstück (3) oder sowohl das erste als auch das zweite Werkstück ein Blechhalbzeug oder ein Blechformteil ist.

5. Verfahren nach einem der vorangehenden Patentansprüche, **dadurch gekennzeichnet, dass**
das erste Werkstück und das zweite Werkstück ein Blechhalbzeug oder ein Blechformteil sind und die Blechdicke (D1) des ersten Werkstücks (2) um mindestens 0,6 mm dicker ist als die Blechdicke (D2) des zweiten Werkstücks (3).

6. Werkstückverbund von wenigstens zwei Werkstücken,
bei dem ein erstes Werkstück (2) und ein zweites Werkstück (3) in einem Fügeabschnitt (4) durch eine mit einem thermischen Fügeverfahren hergestellte Kehlnaht (5) verbunden sind und
die Kehlnaht (5) zwischen einer Stirnfläche (6) des ersten Werkstücks (2) und einer Flanke des zweiten Werkstücks (3) ausgebildet ist,
**dadurch gekennzeichnet, dass**
das erste Werkstück (2) zumindest in dem Fügeabschnitt (4) mit einer an die Stirnfläche (6) angrenzenden Einprägung (7) versehen ist, derart, dass die Dicke (D1) des ersten Werkstücks (2) durch die Einprägung (7) im Bereich der Stirnfläche (6) reduziert ist und
das erste Werkstück (2) mit einer Oberflächenbeschichtung (10) in Form einer Antikorrosionsschicht versehen ist und die Oberflächenbeschichtung (10) im Bereich der Einprägung (7) zumindest teilweise erhalten bleibt.

7. Werkstückverbund nach Patentanspruch 8, **dadurch gekennzeichnet, dass**
die Einprägung (7) als entlang der Werkstückstirnfläche (6) verlaufende Fase ausgebildet ist.

8. Werkstückverbund nach einem der Patentansprüche 6 oder 7, **dadurch gekennzeichnet, dass**
der Werkstückverbund mit einem Verfahren nach einem der Patentansprüche 1 bis 5 hergestellt ist.

## Claims

1. Method for producing a workpiece composite comprising at least two workpieces, in which a first workpiece (2) and a second workpiece (3) are positioned in relation to one another in an overlapping arrangement and a fillet weld (5) is formed between an end face (6) of the first workpiece (2) and a flank of the second workpiece (3) in a joining portion (4) by a thermal joining method,
**characterized in that**
before the forming of the fillet weld (5), the first workpiece (2) is provided at least in the joining portion (4) with an indentation (7) adjoining the end face (6), whereby the thickness (D1) of the first workpiece (2) is reduced in the region of the end face (6), and
the first workpiece (2) is already provided with a surface coating (10) in the form of an anticorrosion layer before the production of the indentation (7) and the surface coating (10) is at least partially retained in the region of the indentation (7).

2. Method according to Patent Claim 1,
**characterized in that**
the indentation (7) has the effect that the first workpiece (2) is provided with a bevel.

3. Method according to one of the preceding patent claims,
**characterized in that**
the indentation (7) is produced in the same process step in which the end face (6) is produced by severing or trimming the first workpiece (2).

4. Method according to one of the preceding patent claims,
**characterized in that**
the first workpiece (2) or the second workpiece (3) or both the first workpiece and the second workpiece is/are a semifinished sheet or a shaped sheet-metal part.

5. Method according to one of the preceding patent claims,
**characterized in that**
the first workpiece and the second workpiece are a semifinished sheet or a shaped sheet-metal part and the sheet thickness (D1) of the first workpiece (2) is thicker than the sheet thickness (D2) of the second workpiece (3) by at least 0.6 mm.

6. Workpiece composite of at least two workpieces, in which a first workpiece (2) and a second workpiece (3) are connected in a joining portion (4) by a fillet weld (5) produced by a thermal joining method and
the fillet weld (5) is formed between an end face (6) of the first workpiece (2) and a flank of the second workpiece (3),
**characterized in that**
the first workpiece (2) is provided at least in the joining portion (4) with an indentation (7) adjoining the end face (6), in such a way that the thickness (D1) of the first workpiece (2) is reduced in the region of the end face (6) by the indentation (7), and
the first workpiece (2) is provided with a surface coating (10) in the form of an anticorrosion layer and the surface coating (10) is at least partially retained in the region of the indentation (7).

7. Workpiece composite according to Patent Claim 8, **characterized in that**
the indentation (7) is formed as a bevel running along the end face (6) of the workpiece.

8. Workpiece composite according to either of Patent Claims 6 and 7,
**characterized in that**
the workpiece composite is produced by a method according to one of Patent Claims 1 to 5.

## Revendications

1. Procédé de fabrication d'une pièce composite munie d'au moins deux pièces, selon lequel une première pièce (2) et une deuxième pièce (3) sont positionnées l'une par rapport à l'autre dans un agencement de chevauchement et une soudure d'angle (5) est formée entre une face frontale (6) de la première pièce (2) et un flanc de la deuxième pièce (3) par un procédé d'assemblage thermique dans une section d'assemblage (4),
**caractérisé en ce que**
avant la formation de la soudure d'angle (5), la première pièce (2) est pourvue au moins dans la section d'assemblage (4) d'une région repoussée (7) jouxtant la face frontale (6), ce qui permet de réduire l'épaisseur (D1) de la première pièce (2) dans la zone de la face frontale (6), et
la première pièce (2) est déjà pourvue, avant la production de la région repoussée (7), d'un revêtement de surface (10) sous la forme d'une couche anticorrosion, et le revêtement de surface (10) est au moins partiellement conservé dans la zone de la région repoussée (7).

2. Procédé selon la revendication 1,
**caractérisé en ce que**
la première pièce (2) est pourvue d'un chanfrein par la région repoussée (7).

3. Procédé selon l'une quelconque des revendications précédentes,
**caractérisé en ce que**
la région repoussée (7) est produite dans la même étape de procédé que celle dans laquelle la face frontale (6) est produite par sectionnement ou coupe de la première pièce (2).

4. Procédé selon l'une quelconque des revendications précédentes,
**caractérisé en ce que**
la première pièce (2) ou la deuxième pièce (3) ou aussi bien la première que la deuxième pièce est un semi-fini de tôle ou une pièce moulée de tôle.

5. Procédé selon l'une quelconque des revendications précédentes,
**caractérisé en ce que**
la première pièce et la deuxième pièce sont un semi-fini de tôle ou une pièce moulée de tôle, et l'épaisseur de tôle (D1) de la première pièce (2) est au moins 0,6 mm plus épaisse que l'épaisseur de tôle (D2) de la deuxième pièce (3).

6. Pièce composite d'au moins deux pièces, dans laquelle une première pièce (2) et une deuxième pièce (3) sont reliées dans une section d'assemblage (4) par une soudure d'angle (5) fabriquée avec un procédé d'assemblage thermique, et
la soudure d'angle (5) est formée entre une face frontale (6) de la première pièce (2) et un flanc de la deuxième pièce (3),
**caractérisée en ce que**
la première pièce (2) est pourvue d'une région repoussée (7) jouxtant la face frontale (6) au moins dans la section d'assemblage (4), de telle sorte que l'épaisseur (D1) de la première pièce (2) est réduite par la région repoussée (7) dans la zone de la face frontale (6), et
la première pièce (2) est pourvue d'un revêtement de surface (10) sous la forme d'une couche anticorrosion et le revêtement de surface (10) est au moins partiellement conservé dans la zone de la région repoussée (7).

7. Pièce composite selon la revendication 8, **caractérisée en ce que**
la région repoussée (7) est configurée en tant que chanfrein s'étendant le long de la face frontale de pièce (6).

8. Pièce composite selon l'une quelconque des revendications 6 ou 7,
**caractérisée en ce que**
la pièce composite est fabriquée par un procédé selon l'une quelconque des revendications 1 à 5.
